# EUROPEAN PATENT SPECIFICATION

(11) **EP 3 802 769 B1**
(45) Date of publication and mention of the grant of the patent: **20.05.2026**
(21) Application number: 19730646.7
(22) Date of filing: 28.05.2019
(51) Int. Cl.: C11D 7/50, C11D 11/00, C11D 7/26, C11D 7/28, C11D 7/30

(54) **NON-AZEOTROPIC CLEANING COMPOSITION**
NICHTAZEOTROPE REINIGUNGSZUSAMMENSETZUNG
COMPOSITION DE NETTOYAGE NON AZÉOTROPE

(30) Priority: 28.05.2018 JP 2018101384
(43) Date of publication of application: 14.04.2021
(73) Proprietor: Chemours-Mitsui Fluoroproducts Co., Ltd., Tokyo 105-0001 (JP)
(72) Inventor: MATSUMOTO, Takanori, Shizuoka, Shizuoka 424--8631 (JP); KIKUCHI, Hideaki, Shizuoka, Shizuoka 424-8631 (JP)
(74) Representative: Abitz & Partner
(86) International application number: PCT/US2019/034094
(87) International publication number: WO 2019/231874

(56) References cited:
- EP-A1- 1 288 284
- WO-A2-2011/084447
- WO-A2-2011/084553
- US-A- 3 881 949
- US-A1- 2012 157 363

## Description

### BACKGROUND INFORMATION

### Field of the Disclosure

The present invention relates to a cleaning composition which is a non-azeotropic mixture suitable for cleaning precision machinery parts such as semiconductor-related parts and optical-related parts, and a cleaning method and cleaning device using the same.

### Description of the Related Art

In the field of precision machinery parts such as semiconductor-related parts, for example, the size considered to be defective in circuit patterns of semiconductor devices has become exceedingly small in step with advances in refinement, high density, and high integration of circuit patterns and multilayer wiring in semiconductor devices, and minute (trace amounts of) contaminants such as particles (foreign microparticles), metal impurities, or chemical contaminants have an increasingly large effect on semiconductor product yield or reliability. In the case of particles, even very fine particles of a sub-micron size (1 µm or smaller) can cause defects which lead to poor quality when adhered to the wafer surface, and therefore even particles of a sub-micron size needs to be removed.

A step of cleaning contaminants such as particles on a precision machinery part such as a semiconductor-related part or an optical-related part typically includes a two-stage step in which, after the part is immersed in a cleaning tank (liquid layer) and subjected to ultrasonic cleaning in a steam cleaning device equipped with a cleaning tank (liquid layer) filled with a cleaning agent and a distillation tank (steam generating tank), the part is pulled out and rinsed with clean heating steam produced by condensation on the surface of the part with a rinsing layer (steam layer) formed by steam generated from the distillation tank (steam generating tank) (US. 3881949). The cleaning agent used in the ultrasonic cleaning step and the rinsing step is a fluorine-based organic solvent in the related art. Since fluorine-based organic solvents ordinarily have high insulating properties, reattachment tends to occur due to static electricity when used alone, which causes a reduction in cleaning capacity, and thus an aqueous organic solvent such as an alcohol is mixed with the cleaning agent.

A cleaning composition formed from such a mixture is preferably not fractionated during use in the cleaning step so that the compositions of the liquid layer and the steam layer do not change, and there is a strong demand for the reuse of fluorine-based organic solvents due to their relatively high price. Therefore, it has been common technical knowledge that the cleaning composition is a composition that is not fractionated during use or during distillation at the time of recovery - that is, an azeotropic mixture having a constant boiling point and a property that the mixture is not fractionated at the time of boiling or evaporation (JP 5784591B and JP 2017-110034A).

WO 2011/084553 A2 discloses compositions comprising Z-1,1,1,4,4,4-hexafluoro-2-butene, which are used for cleaning purposes, among other applications.

However, in recent years, there has been a demand for the removal of very fine particles of a sub-micron size in the field of precision machinery parts, but the effect of removing such very fine particles has been insufficient with cleaning compositions made of such azeotropic mixtures of fluorine-based organic solvents and alcohols.

Accordingly, there is a demand for an improved cleaning composition suited for the cleaning of precision machinery parts and capable of effectively removing even very fine particles of a sub-micron size on the surface of a part. Further, the fluorine-based organic solvent contained in the cleaning composition preferably has a small environmental burden and can comply with the legal regulations of each country.

### SUMMARY

As a result of conducting dedicated research to solve the problems of the known technology described above, the present inventors discovered that a ternary non-azeotropic mixture containing two types of fluorine-based organic solvents with different boiling points and an aqueous organic solvent has high cleaning capacity suited to the cleaning of precision machinery parts and can be used as a cleaning composition exhibiting a small environmental burden as well as excellent safety and economic efficiency, and the present inventors thereby completed the present invention.

With the present invention, a cleaning composition suitable for cleaning precision machinery parts such as semiconductor-related parts and optical-related parts can be provided, and in particular, even very fine particles of a sub-micron size (1 µm or smaller) on the surface of a part can be removed.

In addition, with the present invention, changes in the composition of components can be minimized even when there is a distillation operation in the usage step, and thus the properties of the composition can be maintained, and an economically efficient cleaning composition which is convenient for the recovery or reuse of the composition can be provided.

Further, with the present invention, a cleaning composition having an ozone depleting potential of 0 and a very low global warming potential can be provided, and a cleaning composition having a low risk of ignition as well as excellent safety can be provided.

### BRIEF DESCRIPTION OF THE DRAWINGS

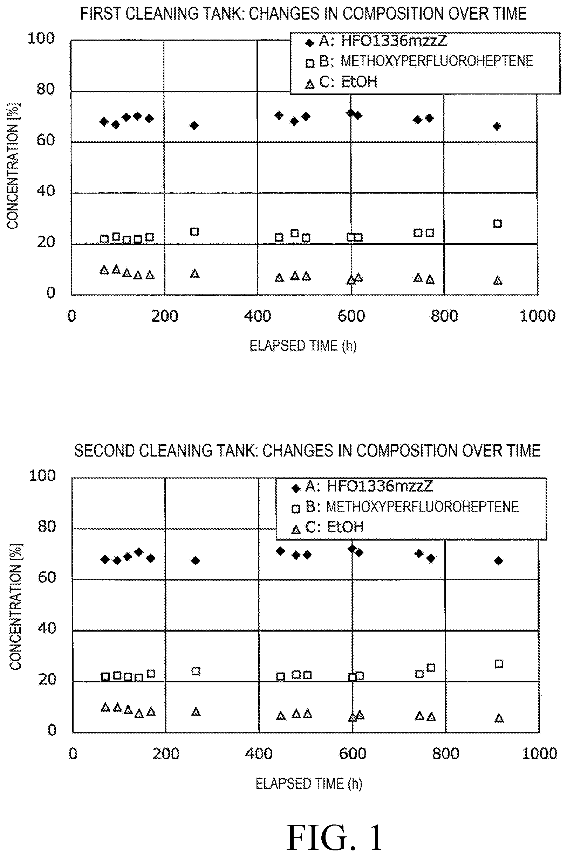

Embodiments are illustrated in the accompanying figures to improve understanding of concepts as presented herein. FIG. 1 is a graph showing a composition with a first cleaning tank (liquid layer) for the ternary non-azeotropic mixture of Example 1. FIG. 1 is a graph showing the composition of the second cleaning tank over time for the mixture of Example 1.

### DETAILED DESCRIPTION

The cleaning composition of the present invention comprises from 50% by weight to 80% by weight of Z-1,1,1,4,4,4-hexafluoro-2-butene, from 10% by weight to 30% by weight of methylperfluoroheptene ethers, and from 5% by weight to 25% by weight of ethanol, wherein the cleaning composition is non-azeotropic. In an embodiment, the composition comprises from 50% to 70% by weight of Z-1,1,1,4,4,4-hexafluoro-2-butene, from 15% to 30% by weight of methylperfluoroheptene ethers, and from 10% to 20% by weight of ethanol. In some embodiments the compositions are non-azeotropic such that the difference between the bubble point pressure of the composition and the dew point pressure of the composition is greater than 50% of said bubble point pressure.

The invention also encompasses a method for cleaning an object having particulate contamination using the composition comprising from 50% by weight to 80% by weight of Z-1,1,1,4,4,4-hexafluoro-2-butene, from 10% by weight to 30% by weight of methylperfluoroheptene ethers, and from 5% by weight to 25% by weight of ethanol, in a liquid layer of a cleaning tank and rinsing with a rinsing layer, which is a steam layer, wherein a temperature difference between the liquid layer of the cleaning tank and the rinsing layer, which is a steam layer, is not less than 20°C

Many aspects and embodiments have been described above and are merely exemplary and not limiting. After reading this specification, skilled artisans appreciate that other aspects and embodiments are possible without departing from the scope of the invention.

Other features and benefits of any one or more of the embodiments will be apparent from the following detailed description, and from the claims.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

As used herein, the phrase "consisting essentially of" is intended to cover a partially exclusive inclusion. For example, a composition, method, process or apparatus that consists essentially of elements is not limited to only those elements, but may only include other elements that do not materially change the intended advantageous properties of the composition, method, process or apparatus.

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the present invention, suitable methods and materials are described below.

In addition, the materials, methods, and examples are illustrative only and not intended to be limiting.

The cleaning composition of the present invention contains: a component A which is Z-1,1,1,4,4,4-hexafluoro-2-butene (HFO-1336mzzZ), a component B which is a methylperfluoroheptene ether, and a component C which is ethanol, wherein the cleaning composition is non-azeotropic.

A hydrofluorocarbon (HFC) is a compound containing carbon, hydrogen, and fluorine. A hydrofluoroether (HFE) is a compound containing carbon, hydrogen, and fluorine and further containing an ether bond. A hydrofluoroolefin (HFO) is a compound containing carbon, hydrogen, and fluorine and further containing a double-bond. A hydrochlorofluoroolefin (HCFO) is a compound containing carbon, hydrogen, fluorine, and chlorine and further containing a double-bond.

In one embodiment, the boiling point of the component B is from 65 to 120°C. In another embodiment, the boiling point of the component B is from 100 to 120°C. When the boiling point is too high, the amount of the component B volatilized from the distillation tank (steam generating tank) decreases, the amount of steam required to maintain steam layer formation decreases, and thereby the final steam rinsing effect may be diminished. This is solved by enhancing the heater of the distillation tank (steam generating tank) to maintain steam layer formation, but this causes an increase in power consumption due to the enhanced heater capacity and an effect on the material of the object to be cleaned due to the increased steam layer temperature. In addition, when the content of the component B in the cleaning tank increases and the boiling point of the cleaning tank rises, the dissolved oxygen content increases, which diminishes the ultrasonic effect. When the temperature of the cleaning tank is increased to avoid this, the object to be cleaned is affected. When the temperature becomes too high, a cooling step becomes necessary between subsequent steps, and the enhancement of the condenser tube also becomes necessary as the steam layer temperature and the cleaning tank temperature rise. When the boiling point is too low, the steam layer temperature decreases, and the amount of condensation decreases accordingly, which leads to a decrease in the steam rinsing effect.

In one embodiment, the cleaning composition of the present invention may contain a stabilizer as necessary. The composition may contain at least one type selected from nitroalkanes, epoxides, furans, benzotriazoles, phenols, amines, and phosphates as a stabilizer. The stabilizer can be selected appropriately from stabilizers that have been used in known chlorofluorocarbons. The compounded amount of these stabilizers is from 0.01 to 5 wt.% and preferably from 0.05 to 0.5 wt.% relative to the composition.

Depending on the purpose, third and fourth fluorine-based organic solvents or an aqueous organic solvent may be added within a range that does not inhibit the effect of the present invention. In addition, when organic foreign matter such as a resist, for example, is present along with the microparticles, a fluorine-based organic solvent having strong affinity thereto may be added with the objective of removing these components.

In some embodiments, the cleaning composition of the present invention is a ternary non-azeotropic mixture of the components A, B, and C. In the present invention, a non-azeotropic composition refers to a composition that does not exhibit azeotropy or similar behavior (azeotrope-like).

A composition exhibiting azeotropy (azeotropic composition) is a mixture of two or more different components and is a composition which, when in a liquid form at a given pressure, boils at a substantially constant temperature which may be higher or lower than the boiling temperature of the respective components, and the composition provides a steam composition which is substantially identical to the overall liquid composition during boiling (for example, see M.F. Doherty and M.F. Malone, Conceptual Design of Distillation Systems, McGraw-Hill (New York), 2001, 185-186, pp. 351-359).

For the purpose of this discussion, near-azeotropic composition means a composition that behaves like an azeotrope (i.e., has constant boiling characteristics or a tendency not to fractionate upon boiling or evaporation). Thus, the composition of the vapor formed during boiling or evaporation is the same as or substantially the same as the original liquid composition. Hence, during boiling or evaporation, the liquid composition, if it changes at all, changes only to a minimal or negligible extent. This is to be contrasted with non-azeotropic compositions in which during boiling or evaporation, the liquid composition changes to a substantial degree.

Near-azeotropic compositions exhibit dew point pressure and bubble point pressure with virtually no pressure differential that is to say the difference in the dew point pressure and bubble point pressure at a given temperature will be a small value. It may be stated that compositions with a difference in dew point pressure and bubble point pressure of less than or equal to 3 percent (based upon the bubble point pressure) may be considered to be a near-azeotropic. In other embodiments, near-azeotropic compositions exhibit differences in dew point pressure and bubble point pressure of less than or equal to 5 percent (based upon the bubble point pressure).

It is also recognized that both the boiling point and the weight percentages of each component of the azeotropic or near-azeotropic liquid composition may change when the azeotropic or near-azeotropic liquid composition is subjected to boiling at different pressures. Thus, an azeotropic or a near-azeotropic composition may be defined in terms of the unique relationship that exists among the components or in terms of the compositional ranges of the components or in terms of exact weight percentages of each component of the composition characterized by a fixed boiling point at a specified pressure.

Further, it is recognized in this field that when the relative volatility of a given system approaches 1.0, the system is defined as forming an azeotropic or azeotrope-like composition. The relative volatility is the ratio of the volatility of a component 2 to the volatility of a component 1. The ratio of the molar fraction of a component in a liquid to that in steam is the volatility of that component.

Calculated values for the cleaning compositions described herein show that at 25 °C the difference between the bubble point and dew point pressures were 72.9%. The same calculations show that at 50 °C the difference between the bubble point and dew point pressures were 57.0%. Clearly the cleaning composition is not-azeotropic or azeotrope-like.

In one embodiment, the cleaning composition of the present invention may be a ternary non-azeotropic mixture of the components A, B, and C. From the perspective of the stability of the composition, it is preferable for the component A and component C to be capable of forming an azeotropic composition and for the component B and component C to be capable of forming an azeotropic composition. In this case, even when the composition of the distillation tank (steam generating tank) were to deviate, the compositions of the rinsing layer (steam layer) and the cleaning tank can be kept constant. Conversely, deviation in composition occurs only in the distillation tank, and the distillation tank therefore fulfills the role of a buffer, so to speak.

When the content of the component A is too small, the main components of the steam layer and the cleaning tank become components B and C, and when the components B and C cannot form azeotropy, the component C becomes the main component. Therefore, as ethanol is used as a component C, the risk of ignition increases in the steam layer. Further, properties including low viscosity, low surface tension, and high density, which are characteristics of the fluorine-based solvents of components A and B as well as key factors for removing and cleaning particles in the cleaning tank, are lost, which leads to a decrease in cleaning performance. On the other hand, when the content of the component A is too high, most of the alcohol content is circulated by azeotropy with the component A, and component B remains inside the steam generating tank (boiling tank) without being capable of forming an azeotropic compound with the alcohol. That is, the amount of the component B present in the steam layer decreases, and the steam layer temperature drops, which leads to a decrease in the amount of steam condensation in the final rinsing step and diminishes the rinsing effect.

When the content of the component B is too low, the steam temperature becomes low, the temperature difference between the cleaning tank and the steam layer becomes small, and the steam rinsing effect is diminished. In addition, moisture is easily drawn into the atmosphere, which leads to a decrease in quality. On the other hand, when the content of the component B is too high, the steam temperature increase, and there is a concern of damage to the precision machinery part, which is the primary object to be cleaned by the present invention.

When the content of the component C is too low, the suppression of static electricity becomes insufficient, and the cleaning capacity is diminished due to the re-attachment of contaminants. In addition, when moisture immixed from the atmosphere or the like is deposited on the object to be cleaned during the cleaning process, the moisture is not dissolved by the component C, which is an aqueous organic solvent, and this may cause a problem in which the moisture remains on the surface of the object to be cleaned. When the content of the component C is too high, the composition becomes flammable, which leads to a concern regarding safety. In addition, the viscosity or surface tension of the composition increases, and the cleaning effect is diminished, while the cleaning effect may also be diminished by a decrease in the specific gravity of the composition.

The cleaning composition of the present invention is preferably environmentally permissible and does not contribute to the depletion of the ozone layer in the stratosphere of the earth. The component A, component B, and the cleaning composition of the present invention have a small ozone depletion potential (ODP), preferably not greater than approximately 0.1, more preferably not greater than approximately 0.05, even more preferably not greater than approximately 0.02, and most preferably approximately 0; and/or a global warming potential (GWP) of not greater than approximately 100, preferably not greater than approximately 50, and more preferably not greater than approximately 10. Both criteria of ODP and GWP are preferably satisfied by this composition.

The ODP used in this specification is defined in the World Meteorological Association report, "Scientific Assessment of Ozone Depletion, 2002".

The GWP used in this specification is defined over a time range of 100 years with respect to carbon dioxide and is defined in the same reference as that related to the ODP described above.

The cleaning composition of the present invention can be used to clean precision machinery parts such as semiconductor-related parts, optical-related parts, electronic parts, or surface-treated parts, for example, and in particular, to clean particles (foreign particles), oil, flax, or the like on semiconductor-related parts or optical-related parts. In particular, very fine particles of a sub-micron size (1 µm or smaller) on the surface of a part can be removed effectively.

A method that has been used in the related art such as wiping off, immersion, brush cleaning, flushing, spraying, or ultrasonic cleaning in a normal temperature cleaning method or immersion, steam rinsing, or steam cleaning in a heat-cleaning method may be used as the cleaning method, and appropriately combining these methods enables even more effective cleaning. The cleaning composition of the present invention can be particularly suitably used in ultrasonic cleaning, steam rinsing, and steam cleaning.

In one embodiment, the cleaning method of the present invention includes: a cleaning step of immersing the object to be cleaned in a washing tank (liquid layer) and performing ultrasonic cleaning in a washing device equipped with a cleaning tank (liquid layer) filled with the cleaning composition of the present invention and a distillation tank (steam generating tank); and a rinsing step of pulling the object up after the cleaning step and rinsing a rinsing layer (steam layer) formed by steam generated from the distillation tank (steam generating tank). In the rinsing step, a cleaning effect is achieved by clean heating steam produced by condensation on the surface of the object to be cleaned.

In one embodiment, the temperature of the cleaning tank is preferably from 15 to 35°C. In another embodiment, the temperature of the cleaning tank is from 20 to 25°C. In one embodiment, the temperature of the steam rinsing layer is from 35 to 65°C. In another embodiment, the temperature of the steam rinsing layer is from 40 to 60°C.

In one embodiment, the temperature difference between the cleaning tank and the rinsing layer is not less than 20°C. In another embodiment, the temperature difference between the cleaning tank and the rinsing layer is not less than 30°C.

In addition, since the composition of the present invention contains large amounts of incombustible fluorine-based organic solvents (components A and B) (preferably not less than 75 wt.%), the composition can exhibit low flammability and excellent safety.

### EXAMPLES

The concepts described herein will be further described in the following examples, which do not limit the scope of the invention described in the claims.

### Component A

Z-1,1,1,4,4,4-hexafluoro-2-butene (HFO-1336mzzZ) (Opteon 1100, available from Chemours Corporation, boiling point: 33°C)

### Component B

Methoxyperfluoroheptene (Opteon SF10, available from Mitsui Dupont Fluorochemicals Co., Ltd., boiling point: 110.5°C)

### Component C

Ethanol (Wako Grade 1, boiling point: 78.37°C)

The following methods were used in the Examples and Comparative Examples.

### Particle removal capacity measurement method

Two mL of a dispersion obtained by dispersing 1 g of a SUS powder produced by cutting a stainless steel (SUS) plate in 100 mL of IPA (Wako Special Grade) was dropped onto a commercially available 15.24-cm (6-inch) silicon bare wafer (purchased from Advanced Materials Technology) while rotating the wafer at from 1000 to 2000 rpm using a coater (POLOS multipurpose spin coater available from Kyodo International, Inc.) to prepare a silicon wafer contaminated with particles.

The number of metal particles (particle count) on the wafer was counted with a wafer tester (YPI-MX-Θ available from YGK Corporation).

Then, the wafer was washed under the following conditions with a vapor degreaser (SK-14Y-1617 double-tank cleaning machine available from YMP Corporation).

### Conditions:

- Ultrasonic frequency: 170 kHz (first and second cleaning tanks)
- Ultrasonic output: 150 W (first cleaning tank), 250 W (second cleaning tank)
- Ultrasonic cleaning time: 120 sec (first and second cleaning tanks)
- Steam cleaning time: 60 sec

The number of the particles on the wafer was similarly counted with a wafer tester after washing, and the difference in particle count before and after washing was used as the particle removal capacity.

### Method for measuring changes in composition over time in the cleaning composition

The cleaning composition was sampled from the first and second cleaning tanks of the vapor degreaser during continuous operation, and the composition was analyzed with the calibration curve method using gas chromatography (GC2014A available from Shimadzu Corporation).

### Example 1

Components A, B, and C were mixed at a mass ratio of 60:25:15 to obtain a non-azeotropic mixture. The obtained mixture is non-azeotropic with the three components, but the component A and component C can form an azeotropic composition at a ratio of 97:3, and the component B and component C can form an azeotropic composition at a ratio of 60:40.

The obtained non-azeotropic mixture was used to measure the particle removal capacity. The results are shown in Table 1 below.

In addition, the changes in composition over time in the first and second cleaning tanks (liquid layers) are shown in FIG. 1 for the obtained non-azeotropic mixture. Although not shown in FIG. 1, the vapor temperature of the steam composition started off at 56°C and remained at 55°C ± 1°C for about 750 hours, before slowly starting to rise to 60°C.

### Example 2

Components A, B, and C were mixed at a mass ratio of 70:15:15 to obtain a non-azeotropic mixture.

The obtained non-azeotropic mixture was used to measure the particle removal capacity. The results are shown in Table 1 below.

### Comparative Example 1

Components A and C were mixed at a mass ratio of 97:3 to obtain an azeotropic mixture.

The obtained mixture was used to measure the particle removal capacity. The results are shown in Table 1 below.

### Comparative Example 2

A commercially available quasi-azeotropic mixture (Novec (trade name) 71IPA, available from 3M; quasi-azeotropic mixture containing 95% of component A: Novec (trade name) 7100 hydrofluoroether C4F9OCH3; and 5% of component C: isopropyl alcohol) was used to measure the particle removal capacity. The results are shown in Table 1 below.

**Table 1**

| Particle size (µm) | Particle removal rate (%) | | | |
|---|---|---|---|---|
| | Example 1 | Example 2 | Comparative Example 1 | Comparative Example 2 |
| 0.2 | 82 | 59 | 24 | 29 |
| 0.5 | 88 | 79 | 65 | 70 |
| 1 | 92 | 77 | 87 | 86 |

The non-azeotropic mixtures of Examples 1 and 2 exhibited a particularly high removal rate with respect to finer particles (particles of a sub-micron size) in comparison to the mixtures of Comparative Examples 1 and 2.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of invention.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

It is to be appreciated that certain features are, for clarity, described herein in the context of separate embodiments, may also be provided in combination in a single embodiment. Conversely, various features that are, for brevity, described in the context of a single embodiment, may also be provided separately or in any subcombination. Further, reference to values stated in ranges include each and every value within that range.

## Claims

1. A cleaning composition comprising:
from 50% by weight to 80% by weight of Z-1,1,1,4,4,4-hexafluoro-2-butene, from 10% by weight to 30% by weight of methylperfluoroheptene ethers, and from 5% by weight to 25% by weight of ethanol, wherein the cleaning composition is non-azeotropic.

2. The composition of claim 1, comprising from 50% to 70% by weight of Z-1,1,1,4,4,4-hexafluoro-2-butene, from 15% to 30% by weight of methylperfluoroheptene ethers, and from 10% to 20% by weight of ethanol.

3. The composition of claim 1, wherein the difference between the bubble point pressure of the composition and the dew point pressure of the composition is greater than 50% of said bubble point pressure.

4. A cleaning method comprising: cleaning an object having particulate contamination using the composition of claim 1, in a liquid layer of a cleaning tank and rinsing with a rinsing layer, which is a steam layer, wherein a temperature difference between the liquid layer of the cleaning tank and the rinsing layer, which is a steam layer, is not less than 20°C.

5. The cleaning method of claim 4, wherein the temperature difference between the cleaning tank and the rinsing layer is not less than 30°C.

## Patentansprüche

1. Reinigungszusammensetzung, umfassend:
von 50 Gew.-% bis 80 Gew.-% Z-1,1,1,4,4,4-Hexafluor-2-buten, von 10 Gew.-% bis 30 Gew.-% Methylperfluorheptenether und von 5% bis zu 25 Gew.-% Ethanol, wobei die Reinigungszusammensetzung nicht azeotrop ist.

2. Zusammensetzung nach Anspruch 1, umfassend von 50 bis 70 Gew.-% Z-1,1,1,4,4,4-Hexafluor-2-buten, von 15 bis 30 Gew.-% Methylperfluorheptenether und von 10 bis 20 Gew.-% Ethanol.

3. Zusammensetzung nach Anspruch 1, wobei die Differenz zwischen dem Siedepunktsdruck der Zusammensetzung und dem Taupunktsdruck der Zusammensetzung mehr als 50 % des Siedepunktsdrucks beträgt.

4. Reinigungsverfahren, umfassend: Reinigen eines Gegenstands, die Partikelverunreinigung aufweist, unter Verwendung der Zusammensetzung nach Anspruch 1 in einer Flüssigkeitsschicht eines Reinigungstanks und Spülen mit einer Spülschicht, die eine Dampfschicht ist,
wobei ein Temperaturunterschied zwischen der Flüssigkeitsschicht des Reinigungstanks und der Spülschicht, die eine Dampfschicht ist, nicht weniger als 20°C beträgt.

5. Reinigungsverfahren nach Anspruch 4, wobei die Temperaturdifferenz zwischen dem Reinigungstank und der Spülschicht nicht weniger als 30°C beträgt.

## Revendications

1. Composition nettoyante comprenant :
de 50 % en poids à 80 % en poids de Z-1,1,1,4,4,4-hexafluoro-2-butène, de 10 % en poids à 30 % en poids d'éthers de méthylperfluoroheptène et de 5 % en poids à 25 % en poids d'éthanol, dans laquelle la composition de nettoyage est non azéotropique.

2. Composition selon la revendication 1, comprenant de 50 % à 70 % en poids de Z-1,1,1,4,4,4-hexafluoro-2-butène, de 15 % à 30 % en poids d'éthers de méthylperfluoroheptène et de 10 % à 20 % en poids d'éthanol.

3. Composition selon la revendication 1, dans laquelle la différence entre la pression de point de bulle de la composition et la pression de point de rosée de la composition est supérieure à 50 % de ladite pression de point de bulle.

4. Procédé de nettoyage comprenant : le nettoyage d'un objet présentant une contamination particulaire à l'aide de la composition selon la revendication 1, dans une couche liquide d'un réservoir de nettoyage et le rinçage avec une couche de rinçage, qui est une couche de vapeur,
dans lequel la différence de température entre la couche liquide du réservoir de nettoyage et la couche de rinçage, qui est une couche de vapeur, est d'au moins 20 °C.

5. Procédé de nettoyage selon la revendication 4, dans lequel la différence de température entre le réservoir de nettoyage et la couche de rinçage est d'au moins 30 °C.
